# EUROPEAN PATENT SPECIFICATION

(11) **EP 0 804 097 B1**
(45) Date of publication and mention of the grant of the patent: **23.12.1998**
(21) Application number: 96905770.2
(22) Date of filing: 15.02.1996
(51) Int. Cl.: A23P 1/08, A23L 1/325

(54) **FOOD PRODUCT AND PROCESS FOR THE PREPARATION THEREOF**
LEBENSMITTEL UND VERFAHREN ZU DESSEN HERSTELLUNG
PRODUIT ALIMENTAIRE ET SON PROCEDE DE PREPARATION

(30) Priority: 28.02.1995 EP 95301308
(43) Date of publication of application: 05.11.1997
(73) Proprietor: UNILEVER PLC, London EC4P 4BQ (GB); UNILEVER N.V., 3013 AL Rotterdam (NL)
(72) Inventor: VAN DER GRAAF, Leendert, Marinus, NL-3135 CD Vlaardingen (NL); SARWIN, Ridwan, NL-3123 PA Schiedam (NL); VERMEER-MOLS, Linda, Johanna, Maria, NL-3145 NH Maassluis (NL)
(74) Representative: Mulder, Cornelis Willem Reinier, Dr.
(86) International application number: EP9600709
(87) International publication number: WO9626652

(56) References cited:
- EP-A- 0 530 014
- WO-A-87/01564
- DE-A- 2 123 636
- FR-A- 2 248 793
- US-A- 3 656 969
- D.SUDERMAN, F.CUNNINGHAM: "Batter and Breading Technology" , ELLIS HORWOOD LTD , GB XP002005028 Pages 39-41, 47-49 see page 39 - page 41 see page 47 see page 49; table 4.8

## Description

### Technical Field of the Invention

The invention relates to a coated food product suitable for heating for consumption in a microwave oven and a process for the preparation thereof.

### Background to the Invention

It is desirable to be able to provide coated food products, usually which are stored frozen, which may preferably be heated for consumption in the microwave oven.

Traditionally, such coated food products, have been heated for consumption by, for example, deep or shallow fat frying, oven baking or grilling. Using such preparation methods, the product provided has the required crisp, crunchy coating. However, when conventional coated products are heated for consumption in a microwave oven the product provided has a crumb coating that is soggy, tough and leathery. This is because the temperature reached at the outer part of the product during microwave heating is not sufficient to generate the crispness required.

Conventional coated food products are manufactured according to the following steps:
* Portioning the food product to be coated
* Applying batter
* Applying coating, typically breadcrumbs
* Frying the coated food product in oil
* Freezing
* Packaging and storage

We have observed that the step of frying the coated product in oil in order to set the batter and adhere the crumbs to the batter results in the relatively dry breadcrumbs (moisture content of approximately 5%) being trapped into the batter having a high moisture content (approximately 60%), leading to a migration of water from the batter into the dry crumb on frozen storage. On conventional heating for consumption (eg. oven baking, grilling, shallow fat frying), the excess moisture in the crumb will be lost, however this is not possible with microwave heating.

We have now solved the problem of how to provide a microwaveable particulate-coated product by use of a modified process of manufacture. In this process, batter is set prior to the application of an adhesive agent and a particulate coating.

EP-A-0530014 discloses a microwaveable deep-frozen food product comprising a raw food material coated in an adhesive material (eg. batter) and unfried, deep-frozen, moist particulate seed, root or tuberous, vegetable. As stated in this document, it does not relate to dry coating materials, such as breadcrumbs.

In contrast, the present invention is particularly suitable for providing a microwaveable food product coated in porous particulates such as bread crumbs.

### Description of the Invention

Accordingly, the present invention provides a process for the manufacture of a food product comprising:
(i) applying batter to a frozen food inner core to form a food core;
(ii) setting the batter;
(iii) freezing the food core;

(a) enrobing the frozen food core with an adhesion agent, the adhesion agent being at a temperature of from 0 to 20°C wherein the adhesion agent has a viscosity of from 0.1 to 6 Pas at 20°C, a setting point of from 40°C to 90°C and a water binding capacity of from 0.3 to 5g water per gram dry matter;
(b) coating the enrobed food core with a particulate coating; and
(c) freezing the food product.

WO-A-8701564 discloses a process having the features mentioned hereabove except for feature (iii) and for the properties of the adhesion agent listed under feature (a).

It should be noted that the adhesive agent is not acting as moisture barrier, ie. it does not necessarily prevent diffusion of water into the crumb coating on frozen storage. Without wishing to be bound by theory, it is thought that the adhesive agent coating prevents any flow of water into the particulate coating via capillary action during at least the initial stages of the heating process for consumption. It is therefore essential that the adhesion agent is not set until at least the initial stages of the heating process for consumption, the adhesion agent thus necessarily has a setting point of from 40°C to 90°C. Furthermore, the water binding capacity of the adhesion agent is such that the adhesion agent substantially prevents water migration into the particulate coating by capillary action at least during the initial stages of heating the food product for consumption.

When the particulate coating is porous, it is important that the pores of the coating are not substantially blocked by either frying in fat or applying a batter which penetrates deeply into the pores; should the pores become so blocked, heating the coated product in a microwave oven is not sufficient to dry the coating to achieve crispiness. The adhesion agent of the present invention penetrates the pores of the coating sufficiently to properly adhere the coating to the food core, but does not substantially block the pores. Hence, cooking the coated food product for consumption in a microwave oven results in the coating being crispy.

The food inner core may comprise, for example, meat, such as poultry, lamb, beef, pork, veal; fish; vegetables and mixtures thereof. The food inner core may also comprise a sauce.

The food core is frozen, preferably to from -20 to -30°C, before enrobing in the adhesive agent (process step (a)).

### The Batter

The batter may be a dry batter mix or a batter mix suspension in water. The batter may comprise flour, starch including modified starch, carrageenan, xanthan, maltodextrins, pectins, alginates, guar gum, agar, gum arabic, locust bean gum, carboxymethylcellulose, hydroxypropyl methyl cellulose, methyl cellulose and mixtures thereof.

The batter is set by any suitable means, for example, deepfrying in oil, blast freezing, by application of High Intensity Near Infra Red as disclosed in WO94/10857 or by the application of steam as disclosed in GB 1 508 781.

### The Adhesion Agent

Preferably the adhesion agent has a viscosity of from 0.3 Pas to 5 Pas at 20°C and a preferred setting point of from 67 to 78°C.

The adhesion agent will typically be a composition comprising a hydrocolloid and/or a soluble protein. The adhesion agent may also optionally comprise fat, for example, vegetable oil.

Suitable hydrocolloids include starch, including modified starch, carrageenan, xanthan, maltodextrins, pectins, alginates, guar gum, agar, gum arabic, locust bean gum, carboxymethylcellulose, hydroxypropyl methyl cellulose, methyl cellulose and mixtures thereof.

Suitable soluble proteins include albumins, globulins, gliadins, glutenins, gelatin, muscle proteins and mixtures thereof. Preferably the soluble protein is selected from albumins, globulins and mixtures thereof.

Suitable adhesion agents are, for example, egg yolk and a composition containing:
1% w/w methylcellulose
39% w/w waxy maize starch
10% w/w coconut fat
50% w/w water.

### The particulate coating

By particulate coating is meant any particulate coating material including breadcrumbs and other crumb coatings, vegetable pieces, seeds and mixtures thereof. Preferably a porous particulate coating is used, for example the commercially available Pandora Japanese crumbs, rice flakes and potato fresco crumbs.

Advantageously the crumb may be of the type disclosed in WO94/22330, WO94/18857, EP 319 287, EP 530 014, EP 235 308, EP 333 886 and EP 565 386.

### EXAMPLES

### Example 1

A coated food product was prepared as follows.

A frozen Alaska Pollock fish block was cut into small portions (25g). The fish portion was enrobed in a conventional batter.

### Batter Composition

20.7% w/w Green flour (Green flour Millers, UK)
10.35% w/w Trident flour (James Bulman, UK)
10.35% w/w raw potato starch
2% w/w salt
56.6% w/w water

The enrobed fish was fried for 25 seconds at 190°C and was quickly frozen at -30°C, for 15 min.

The fish was then dipped into egg yolk (the adhesion agent) and covered with Pandora Japanese crumbs before freezing at -14°C for storage for 2, 4 or 8 weeks.

The adhesion agent, egg yolk, had a setting point of 78°C, a viscosity of 0.3 Pas at 20°C and a water binding capacity of 1.3 to 1.8g water/g dry matter.

After cooking the frozen samples in a conventional microwave oven (650 watts, Panasonic type 5485H) for 3½ minutes and allowing to stand for 3 minutes at room temperature, the products were assessed by a trained sensory panel.

The products all had excellent quality. The crumbs were crisp.

### Example 2

Example 1 was repeated except the adhesion agent was a composition containing
1% w/w methylcellulose
39% w/w waxy maize starch
10% w/w coconut fat
50% w/w water

This adhesion agent had a setting point of 67°C and a water binding capacity of from 0.8 to 0.9g water/g dry matter

The products all had excellent quality and the crumbs were crisp.

### Comparative Example A

A coated food product was prepared by the traditional process as follows:

A frozen Alaska Pollock fish block was cut into small portions (25g). The fish portion was enrobed in a conventional batter as used in Example 1 and covered with Pandora Japanese crumbs. The coated product was fried for 25 seconds at 190°C, then quickly frozen at -30°C.

The product was stored at -14°C for 2, 4 or 8 weeks.

After cooking the frozen samples as in Example 1 the products were assessed by a trained sensory panel.

The products had a soggy crumb coating.

## Claims

1. A process for the manufacture of a food product comprising the steps of;
(i) applying batter to a frozen food inner core to form a food core;
(ii) setting the batter;
(iii) freezing the food core;
(a) enrobing the frozen food core with an adhesion agent, the adhesion agent being at a temperature of from 0 to 20°C, wherein the adhesion agent has a viscosity of from 0.1 to 6 Pas at 20°C, a setting point of from 40°C to 90°C and a water binding capacity of from 0.3 to 5g water per gram dry matter;
(b) coating the enrobed food core with a particulate coating; and
(c) freezing the food product.

2. A process according to claim 1 wherein the adhesion agent has a viscosity of from 0.3 to 5 Pas at 20°C.

3. A process according to claim 1 or claim 2 wherein the adhesion agent has a setting point of from 67 to 78°C.

4. A process according to any preceding claim wherein the adhesion agent comprises a hydrocolloid and/or a soluble protein.

5. A process according to claim 4 wherein the hydrocolloid is selected from the group consisting of starch, including modified starch, carrageenan, xanthan, maltodextrins, pectins, alginates, guar gum, agar, gum arabic, locust bean gum, carboxymethyl cellulose, hydroxypropyl methyl cellulose, methyl cellulose and mixtures thereof.

6. A process according to claim 4 or claim 5 wherein the soluble protein is selected from the group consisting of albumins, globulins, gliadins, glutenins, gelatin, muscle proteins and mixtures thereof.

7. A process according to claim 4 wherein the adhesion agent additionally comprises a fat.

8. A process according to any preceding claim wherein the adhesion agent is egg yolk.

9. A process according to any preceding claim wherein the adhesion agent has the composition
1% w/w methylcellulose
39% w/w waxy maize starch
10% w/w coconut fat
50% w/w water.

10. A process according to any preceding claim, wherein the particulate coating is porous.

11. A food product obtainable by a process comprising;
(i) applying batter to a frozen food inner core to form a food core;
(ii) setting the batter;
(iii) freezing the food core;
(a) enrobing the frozen food core with a adhesive agent, the adhesive agent being at a temperature of from 0 to 20°C, wherein the adhesion agent has a viscosity of from 0.1 to 6 Pas at 20°C, a setting point of from 40°C to 90°C, and a binding capacity of from 0.3 to 5g water per gram dry matter;
(b) coating the enrobed food core with a particulate coating;
(c) freezing the food product.

## Patentansprüche

1. Verfahren zur Herstellung eines Nahrungsmittelprodukts, welches die Schritte umfaßt:
(i) Aufbringen eines dünnen Teigs auf einem gefrorenen inneren Nahrungsmittelkern, um einen Nahrungsmittelkern zu bilden;
(ii) Verfestigen des Teigs;
(iii) Einfrieren des Nahrungsmittelkerns;
(a) Umhüllen des gefrorenen Nahrungsmittelkerns mit einem Haftmittel, welches Haftmittel bei einer Temperatur von 0 bis 20°C ist, wobei das Haftmittel eine Viskosität von 0,1 bis 6 Pa.s bei 20°C, einen Verfestigungspunkt von 40°C bis 90°C und eine Wasserbindungskapazität von 0,3 bis 5 g Wasser pro g Trockenmasse aufweist;
(b) Überziehen des umhüllten Nahrungsmittelkerns mit einem teilchenförmigen Überzug; und
(c) Einfrieren des Nahrungsmittelprodukts.

2. Verfahren nach Anspruch 1, bei welchem das Haftmittel eine Viskosität von 0,3 bis 5 Pa.s bei 20°C aufweist.

3. Verfahren nach Anspruch 1 oder Anspruch 2, bei welchem das Haftmittel einen Verfestigungspunkt von 67 bis 78°C aufweist.

4. Verfahren nach einem der vorhergehenden Ansprüche, bei welchem das Haftmittel ein Hydrokolloid und/oder ein lösliches Protein umfaßt.

5. Verfahren nach Anspruch 4, bet welchem das Hydrokolloid ausgewählt wird aus der Gruppe bestehend aus Stärke, einschließlich modifizierter Stärke, Carrageenan, Xanthan, Maltodextrinen, Pektinen, Alginaten, Guargummi, Agar, Gummi arabicum, Johannisbrotgummi, Carboxymethylcellulose, Hydroxypropylmethylcellulose, Methylcellulose und Mischungen hievon.

6. Verfahren nach Anspruch 4 oder Anspruch 5, bei welchem das lösliche Protein ausgewählt wird aus der Gruppe bestehend aus Albuminen, Globulinen, Gliadinen, Gluteninen, Gelatine, Muskelproteinen und Mischungen hievon.

7. Verfahren nach Anspruch 4, bei welchem das Haftmittel zusätzlich ein Fett umfaßt.

8. Verfahren nach einem der vorhergehenden Ansprüche, bei welchem das Haftmittel Eigelb ist.

9. Verfahren nach einem der vorhergehenden Ansprüche, bei welchem das Haftmittel die Zusammensetzung aufweist.
1 % M/M Methylcellulose,
39 % M/M wachsartige Maisstärke,
10 % M/M Kokosfett,
50 % M/M Wasser.

10. Verfahren nach einem der vorhergehenden Ansprüche, bei welchem der teilchenförmige Überzug porös ist.

11. Nahrungsmittelprodukt, welches durch ein Verfahren erhalten werden kann, das umfaßt:
(i) Aufbringen eines dünnen Teigs auf einem gefrorenen inneren Nahrungsmittelkern, um einen Nahrungsmittelkern zu bilden;
(ii) Verfestigen des Teigs;
(iii) Einfrieren des Nahrungsmittelkerns;
(a) Umhüllen des gefrorenen Nahrungsmittelkerns mit einem Haftmittel, welches Haftmittel bei einer Temperatur von 0 bis 20°C ist, wobei das Haftmittel eine Viskosität von 0,1 bis 6 Pa.s bei 20°C, einen Verfestigungspunkt von 40°C bis 90°C und eine Wasserbindungskapazität von 0,3 bis 5 g Wasser pro g Trockenmasse aufweist;
(b) Überziehen des umhüllten Nahrungsmittelkerns mit einem teilchenförmigen Überzug;
(c) Einfrieren des Nahrungsmittelprodukts.

## Revendications

1. Procédé de fabrication d'un produit alimentaire comprenant les stades de :
(i) application d'une pâte à un noyau interne d'un aliment congelé pour former un noyau d'aliment ;
(ii) durcissement de la pâte ;
(iii) congélation du noyau d'aliment ;
(a) enrobage du noyau d'aliment congelé avec un agent adhésif, l'agent adhésif étant à une température de 0 à 20°C, dans lequel l'agent adhésif a une viscosité de 0,1 à 6 Pas à 20°C, un point de durcissement de 40 à 90°C et une capacité de liaison de l'eau de 0,3 à 5 g d'eau par gramme de matière sèche ;
(b) enrobage du noyau d'aliment enrobé avec un enrobage particulaire ; et
(c) congélation du produit alimentaire.

2. Procédé selon la revendication 1, dans lequel l'agent adhésif a une viscosité de 0,3 à 5 Pas à 20°C.

3. Procédé selon la revendication 1 ou 2, dans lequel l'agent adhésif a un point de durcissement de 67 à 78°C.

4. Procédé selon l'une quelconque des revendications précédentes, dans lequel l'agent adhésif comprend un hydrocolloïde et/ou une protéine soluble.

5. Procédé selon la revendication 4, dans lequel l'hydrocolloïde est choisi parmi l'amidon, notamment l'amidon modifié, le carragheenane, le xanthane, les maltodextrines, les pectines, les alginates, la gomme de guar, l'agar agar, la gomme arabique, la gomme de caroube, la carboxyméthylcellulose, l'hydroxypropylméthylcellulose, la méthylcellulose et leurs mélanges.

6. Procédé selon la revendication 4 ou 5, dans lequel la protéine soluble est choisie parmi les albumines, les globulines, les gliadines, les gluténines, la gélatine, les protéines de muscles et leurs mélanges.

7. Procédé selon la revendication 4, dans lequel l'agent adhésif comprend de plus une graisse.

8. Procédé selon l'une quelconque des revendications précédentes, dans lequel l'agent adhésif est le jaune d'oeuf.

9. Procédé selon l'une quelconque des revendications précédentes, dans lequel l'agent adhésif a la composition :
1% en poids de méthylcellulose
39% en poids d'amidon de maïs cireux
10% en poids de graisse de coprah
50% en poids d'eau.

10. Procédé selon l'une quelconque des revendications précédentes, dans lequel l'enrobage particulaire est poreux.

11. Produit alimentaire qu'on peut obtenir par un procédé comprenant :
(i) l'application d'une pâte à un noyau interne d'un aliment congelé pour former un noyau d'aliment ;
(ii) le durcissment de la pâte;
(iii) la congélation du noyau d'aliment;
(a) l'enrobage du noyau d'aliment congelé avec un agent adhésif, l'agent adhésif étant à une température de 0 à 20°C, dans lequel l'agent adhésif a une viscosité de 0,1 à 6 Pas à 20°C, un point de durcissement de 40 à 90°C et une capacité de liaison de l'eau de 0,3 à 5 g d'eau par gramme de matière sèche ;
(b) l'enrobage du noyau d'aliment enrobé avec un enrobage particulaire ; et
(c) la congélation du produit alimentaire.
